# EUROPEAN PATENT APPLICATION

(11) **EP 2 735 543 A2**
(43) Date of publication of application: **28.05.2014**
(21) Application number: 12815496.0
(22) Date of filing: 19.07.2012
(51) Int. Cl.: C01B 33/18, C01B 33/12, B82B 3/00, B82Y 40/00

(54) **VOLUME PRODUCTION METHOD FOR UNIFORMLY SIZED SILICA NANOPARTICLES**

(30) Priority: 21.07.2011 KR 20110072691
(71) Applicant: SNU R&DB Foundation, Seoul 151-742 (KR)
(72) Inventor: HYEON, Taeghwan, Seoul 135-537 (KR); PIAO, Yuanzhe, Suwon-si, Gyeonggi-do 443-270 (KR); QUAN, Bo, Suwon-si, Gyeonggi-do 443-270 (KR)
(74) Representative: Brann AB
(86) International application number: PCT/KR2012/005770
(87) International publication number: WO 2013/012268

(57) **Abstract**

The present invention relates to a method for large-scale production of uniform-sized silica nanoparticles, using a basic buffer solution. In particular, the present invention is directed to a method for producing uniform-sized silica nanoparticles, comprising: (i) adding a solution of a silica precursor and an organic solvent to a basic buffer solution, followed by heating; and (ii) separating silica nanoparticles produced in the step (i).

## Description

### [Technical Field]

The present invention relates to a method for large-scale production of uniform-sized silica nanoparticles, using a basic buffer solution. In particular, the present invention is directed to a method for producing uniform-sized silica nanoparticles, comprising: (i) adding a solution of a silica precursor and an organic solvent to a basic buffer solution, followed by heating; and (ii) separating silica nanoparticles produced in the step (i).

### [Background Art]

For several recent years, developments and application of silica-based nanoparticles have been made actively. U.S. FDA (Food and Drug Administration) approved silica as "generally recognized as safe (GRAS)". Since silica nanoparticles are extremely biocompatible, they are used variously for bioresearches.

In addition, it is very easy to label proteins, enzymes, DNAs, etc. on the surface of silica, and many processes for labeling functional groups such as amine, carboxyl, ect. on the surface of silica (Yan, Jilin , et al., Nano Today, 2007, 2, 3).

Therefore, biosensors prepared by doping labeling substances such as fluorescent dyes, magnetic materials and radioactive materials to these silica-based nanoparticles, have been widely used for *in vivo* or *in vitro* biological experiments (Piao, Y., et al., Advanced Functional Materials, 2008, 18, 3745-3758).

Moreover, mesoporous silica nanoparticles may be used for drug delivery by loading DNA, anti-cancer, etc. inside or on the surfaces of the silica nanoparticles (Slowing, Igor I., Trewyn, Brian G., Giri, Supratim, Lin, Victor S.-Y Advanced Functional Materials, 2007, 17, 1225-1236).

Industrially, silica is widely used for desiccants, supports for catalysts, additives, etc. (Kim, J., et al., Angewandte Chemie International Edition, 2006, 45, 4789-4793)

Further, silica has been utilized for templates for synthesizing various nanomaterials since silica is well dispersible in water and easily removed by using NaOH solution. That is, porous carbon structures, such as hollow carbon nanocapsules, may be synthesized by assembling silica nanoparticles, introducing carbon precursors on the surface of the silica nanoparticles followed by carbonizing thereof, and removing the silica (Arnal, P. M., Schuth, F., Kleitz, F. Chem. Commun. 2006, 1203; Bon, S., Sohn, Y. K., Kim, J. Y., Shin, C.-H., Yu, J.-S., Hyeon, T., Advanced Material. 2002, 14, 19).

When silica nanoparticles are used for the above-mentioned researches, the size of the silica nanoparticles is very important. Silica nanoparticles which are to be used for bio-experiments should not be too large or too small.

If silica nanoparticles are too large, they cannot circulate in a body and will be removed by an immune system. However, if silica nanoparticles are too small, the retention time of the particles become much short and, thus, it is difficult to perform biomedical imaging.

When silica nanoparticles are used as porous nanomaterials, the pore size depends upon the size of the silica nanoparticles and, by controlling these characteristics, other properties such as a specific surface area are also determined.

Further, for industrial application of silica nanoparticles, it should be possible for large-scale production of silica nanoparticles. Therefore, it is very important to produce uniform-sized silica nanoparticles in various particle sizes in a large scale.

The Stöber process has been currently adopted for synthesis of silica nanoparticles (Stöber, W. and A. Fink, Bohn, Journal of Colloid and Interface Science, 1986, 26, 62). According to the Stöber process, silica nanoparticles are formed by hydrolysis of tetraethyl orthosilicate (silica precursor) in an aqueous alkaline solution containing a basic catalyst. Aqueous ammonia, NaOH, etc. are used for the basic catalyst.

According to the Stöber process, silica nanoparticles having a size of 50 nm - 2 µm may be synthesized. However, the silica nanoparticles synthesized by the Stöber process, of which size is below 100 nm, are not uniform-sized. It is also difficult to synthesize spherical silica nanoparticles having a size of below 100 nm, according to the Stöber process.

Alternatively, silica nanoparticles may be prepared by the reverse microemulsion process (F.J. Arriagada and K. Osseo-Asare, Journal of Colloid and Interface Science, 1999, 211, 210). According to the reverse microemulsion process, silica nanoparticles are prepared by using TEOS as a template of the microemulsion and an alkaline catalyst. The reverse microemulsion process allows for producing silica nanoparticles which are 30-70 nm, uniform-sized and almost spherical.

However, a large amount of surfactants is used in reverse microemulsion process and, thus, the surfactant should be removed from the silica nanoparticles prepared by the large amount of surfactants before use. In addition, it is difficult to produce silica nanoparticles in a large-scale according to the large amount of surfactants. Therefore, it is very difficult to prepare in a large-scale silica nanoparticles which are small, uniform-sized, according to the conventional processes.

### [Disclosure]

### [Technical Problem]

The object of the present invention is to provide a method for producing uniform-sized silica nanoparticles, comprising: (i) adding a solution of a silica precursor and an organic solvent to a basic buffer solution, followed by heating; and (ii) separating silica nanoparticles produced in the step (i).

### [Technical Solution]

The above-mentioned object of the present invention can be accomplished by providing a method for producing uniform-sized silica nanoparticles, comprising: (i) adding a solution of a silica precursor and an organic solvent to a basic buffer solution, followed by heating; and (ii) separating silica nanoparticles produced in the step (i).

The silica precursor employed in the method for producing uniform-sized silica nanoparticles of the present invention may be tetraethylorthosilication (TEOS), tetramethoxysilane (TMOS) or silicon tetrachloride, but not limited thereto. In addition, the organic solvent may be cyclohexane, hexane, heptane or octane, but not limited thereto.

The basic buffer solution may preferably have a pH of 9-14 and may be, for example, NH₄Cl·NH₃ buffer solution, KCl·NaOH buffer solution, aqueous lysine solution or aqueous arginine solution, but not limited thereto.

The heating temperature of the step (i) is preferably 25°C to 80°C, more preferably 50°C to 70°C. By changing the heating temperature of the step (i), the size of the silica nanoparticle may be controlled. That is, when the heating temperature is raised, the size of the silica nanoparticle becomes larger and *vice versa.*

The silica nanoparticles synthesized at the step (i) have a size of 5 nm to 50 nm.

The method for producing uniform-sized silica nanoparticles of the present invention may further comprise (iii) dispersing said silica nanoparticles obtained in the step (ii) into a mixture of water and ethanol; and (iv) regrowing said silica nanoparticles by adding a basic catalyst to the dispersion solution in the step (iii).

The basic catalyst of the step (iii) is preferably aqueous ammonia, aqueous NaOH solution or aqueous KOH solution. The reaction temperature of the step (iii) is preferably room temperature.

The size of the silica nanoparticles which were regrown in the step (iv) may be 60 nm to 2,000 nm.

### [Advantageous Effects]

According to the present invention, 5 nm- to 50 nm-sized silica nanoparticles may be produced in large scale. In addition, the size of the silica nanoparticle may be increased to be 2 µm through the regrowing procedure (the step (iv)) of the silica nanoparticle.

Moreover, the silica nanoparticles prepared by the present invention are spherical, do not aggregate, and disperse well into aqueous system.

### [Brief Description of the Drawings]

Fig. 1 shows TEM images of the silica nanoparticles having a diameter of 5 nm to 35 nm, which were prepared by using an alkaline buffer solution.
Fig. 2 shows TEM images of the silica nanoparticles of which sizes were adjusted to be 100 nm and 250 nm through regrowth of the silica nanoparticles of Fig. 1 by using the silica nanoparticles of Fig. 1 as nulei.
Fig. 3 shows a SEM image of the silica nanoparticles having a diameter of 20 nm, which were prepared by using an alkaline buffer solution.
Fig. 4 shows a SEM image of the silica nanoparticles of which sizes were adjusted to be 100 nm through regrowth of the silica nanoparticles of Fig. 2 by using the silica nanoparticles of Fig. 2 as nulei.
Fig. 5 shows a TEM image of the about 40 nm-sized silica nanoparticles prepared by the Stöber process.

### [Best Mode for Carrying Out the Invention]

Hereinafter, the present invention will be described in greater detail with reference to the following examples and drawings. The examples and drawings are given only for illustration of the present invention and not to be limiting the present invention.

### Example

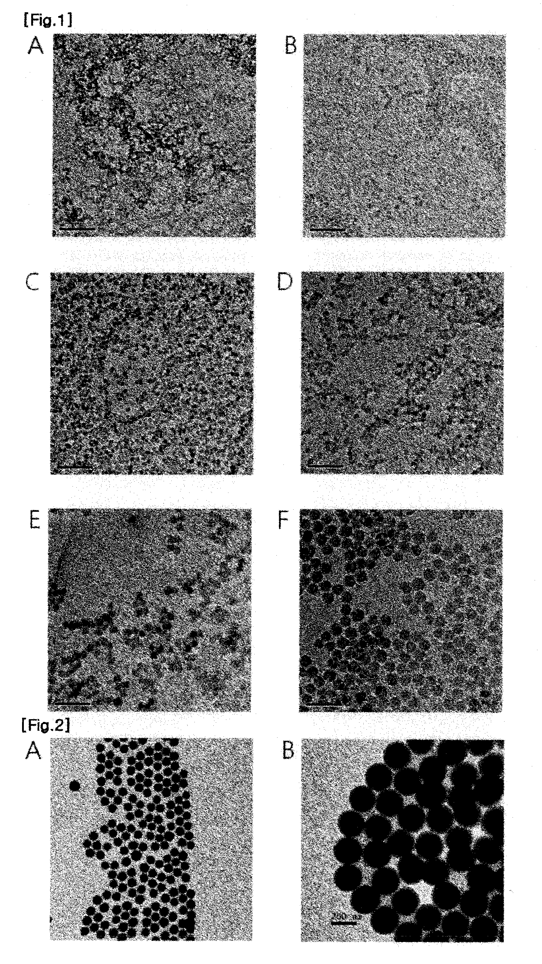

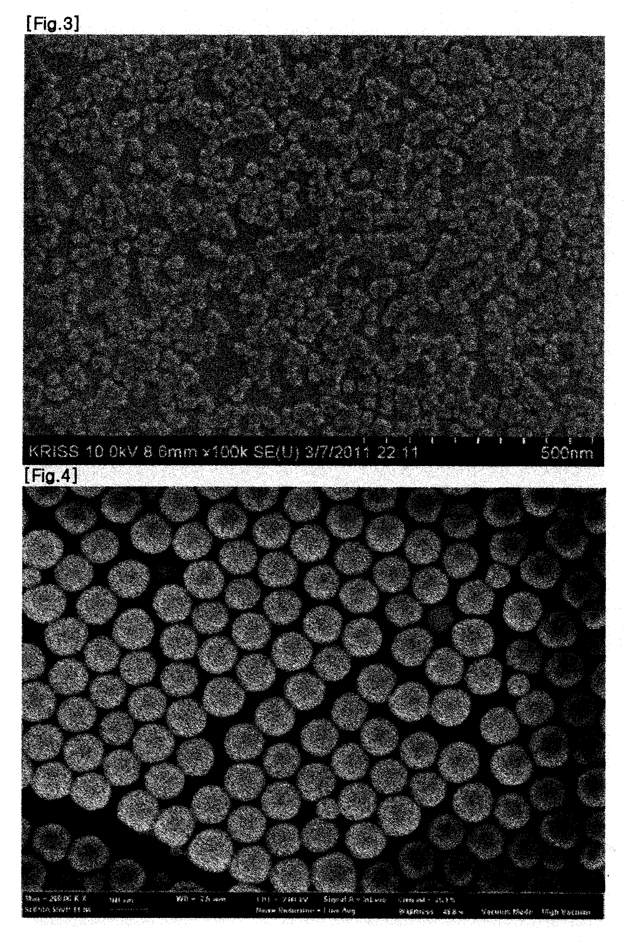

First, NH₄Cl·NH₃ buffer solution was prepared. 0.24 g of ammonium chloride (NH₄Cl) was dissolved in 330 mL of water and, then, pH of the NH₄Cl solution was measured by using a pH meter. The pH of the ammonium chloride solution was adjusted to be 9.0 by adding 30% aqueous ammonia or HCl. Then, the total volume of the ammonium chloride solution was made to be 350 mL by adding water thereto. 350 mL of the thus prepared buffer solution was used as a reaction solvent. The reaction solvent was heated to 60°C and the temperature was maintained. A mixture solution of 100 mL of tetraethyl orthosilicate (TEOS) as a silica precursor and 50 mL of cyclohexane was added to the reaction solvent, stirred homogeneously, and reacted for 24 hr at 60°C. After completion of the reaction, the upper organic solvent layer was removed. It was confirmed by using TEM and SEM that about 12.73 g of 25 nm-sized silica nanoparticles were produced as a result of the reaction (Fig 1 and Fig. 3). When the temperature of the reaction solution was adjusted at a range of 25°C - 80°C and stirred for 24 hr, it was possible to make the size of the nanoparticles uniform.

1 mL of the thus obtained nanoparticles was used as nuclei and were dispersed into a mixture solution of 9 mL of water and 90 mL of ethanol. Then, 0.5 mL of TEOS and 2.5 mL of aqueous ammonia were added and reacted for 24 hr at room temperature. Then, 100 nm-sized silica nanoparticles were formed. The size of the silica nanoparticles could be controlled by adjusting the amount of the aqueous ammonia (Fig 2 and Fig. 4).

### Comparative Example

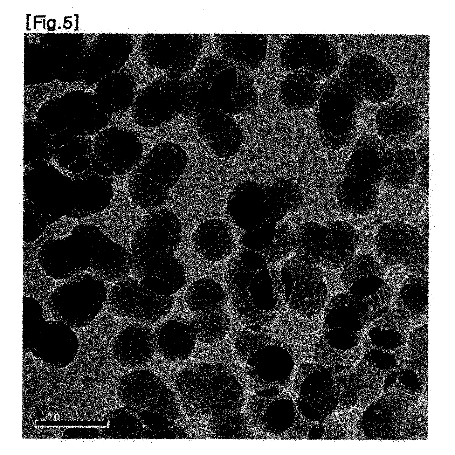

Silica nanoparticles were synthesized by using Stöber process. 1 mL of TEOS was added to a mixture solution of 10 mL of water and 50 mL of ethanol, and 3 mL of aqueous ammonia was added slowly. The reaction solution was stirred and reacted for 24 hr at room temperature. As a result of the reaction, large amount of silica nanoparticles of which size and shape are not uniform and spherical, respectively (Fig 5).

### [Industrial Applicability]

The silica nanoparticles prepared by the present invention may be applied to various fields, for example, biomedical field such as *in vivo* or *in vitro* experiments, etc. The present invention may also be applied to a template for various porous nanomaterials as well as supports for catalysts since large-scale production of silica nanoparticles is possible according to the present invention.

## Claims

1. A method for producing uniform-sized silica nanoparticles, comprising:
(i) adding a solution of a silica precursor and an organic solvent to a basic buffer solution, followed by heating; and
(ii) separating silica nanoparticles produced in the step (i).

2. The method of Claim 1, wherein said silica precursor is selected from the group consisting of tetraethyl orthosilicate, tetramethoxysilane and silicon tetrachloride.

3. The method of Claim 1, wherein said organic solvent is selected from the group consisting of cyclohexane, hexane, heptane and octane.

4. The method of Claim 1, wherein pH of said basic buffer solution is 9-14.

5. The method of Claim 4, wherein said basic buffer solution is selected from the group consisting of NH₄Cl·NH₃ buffer solution, KCl·NaOH buffer solution, aqueous lysine solution and aqueous arginine solution.

6. The method of Claim 1, wherein the heating temperature in the step (i) is 25°C to 80°C.

7. The method of Claim 1, wherein the sizes of said silica nanoparticles are controlled by changing the heating temperature in the step (i).

8. The method of Claim 1, wherein the size of said silica nanoparticles is 5 nm to 50 nm.

9. The method of Claim 1, further comprising:
(iii) dispersing said silica nanoparticles obtained in the step (ii) into a mixture of water and ethanol; and
(iv) regrowing said silica nanoparticles by adding a basic catalyst to the dispersion solution in the step (iii).

10. The method of Claim 9, wherein said basic catalyst is aqueous ammonia.

11. The method of Claim 9, wherein the size of said regrown silica nanoparticles are 60 nm to 2,000 nm.
